# EUROPEAN PATENT APPLICATION

(11) **EP 0 587 259 A2**
(43) Date of publication of application: **16.03.1994**
(21) Application number: 93250202.4
(22) Date of filing: 09.07.1993
(51) Int. Cl.: H04Q 3/00, H04M 15/00

(54) **Modular telecommunications system**

(30) Priority: 11.09.1992 US 944166; 16.12.1992 US 991443
(71) Applicant: INTELLICALL, INC., Carrollton, TX 75006-5023 (US)
(72) Inventor: Naeini, Abdolreza Saeidi, Dallas, Texas 75287 (US); Owen, D. Lindsey, Carrollton, Texas 75007 (US); Hird, John A., Dallas, Texas 75248 (US); Thorn, W. David, Richardson, Texas 75082 (US); Hansen, E.A. Harold, Plano, Texas 75075 (US)
(74) Representative: UEXKÜLL & STOLBERG

(57) **Abstract**

A telecommunications network (10) comprises local telecommunications devices such as payphones (12,14) and call processors (16,18) and intelligent network platforms (20,22,24). Intelligent network platforms (20,22,24) are highly flexible and modular systems that may comprise a system control module (56), an administrative control module (50), a real time module (52), an interface module (44), a switch module (46), a service module (48), and a power module (54) coupled together by a multichannel bus (36). The intelligent network platforms (20,22,24) may interface with intelligent pay telephones (150) to process call traffic through the network (10).

## Description

### TECHNICAL FIELD OF THE INVENTION

This invention relates in general to the field of telecommunications systems and more particularly to methods and apparatus using a modular telecommunications system.

### BACKGROUND OF THE INVENTION

The traditional architecture of a telecommunications system involves a relatively simple and passive telephone instrument that is coupled via telephone lines to a central office. In this architecture, most of the call processing and other sophisticated systems is resident within the central office with the local telephone instrument acting merely as an interface to the end user and in generally a passive mode with respect to the central office systems.

Recent developments have distributed the processing capabilities to create "smart" telephone systems. These smart telephones can perform call processing and automated operator services locally and can greatly enhance the performance of a telecommunications network. Such sophisticated telecommunications systems and functionalities are described in U.S. Patent Nos. 4,933,965; 4,933,966; 4,890,317; 4,908,852; 4,952,588; and 4,920,562 assigned to the assignee of the present application, the disclosures of which are hereby incorporated by reference.

A need has arisen for systems and methods to further distribute and localize the processing capability of central offices. Further needs have arisen for the provision of secured telecommunication network environments consisting of highly flexible intelligent network platforms. Flexible secure telecommunication networks allow for the provision of rapid telecommunications services without the need for costly modification or upgrades of the existing systems. This complex processing capability beyond the functionality of the "smart phones" may be provided in intelligent network platform such as the intelligent network platform that is described in the parent of the present application and herein. Low cost distributed call processing capability can provide a platform for rapid telecommunications service deployment without the need for costly upgrade of the central offices. For example, large-scale sophisticated telecommunications services can be provided to areas very inexpensively and very quickly using distributed intelligent network platforms without having to implement or upgrade a traditional and expensive central office systems.

Accordingly, a need has arisen for a modular telecommunications system which may provide inexpensive, intelligent and flexible distributed call processing capability.

### SUMMARY OF THE INVENTION

In accordance with the teachings of the present invention, a modular telecommunications system is provided that substantially eliminates or reduces disadvantages associated with prior art systems.

According to one embodiment of the present invention, a secured telecommunications network environment is provided that consists of highly flexible and modular intelligent network platforms. These platforms may provide rapid deployment of telecommunications services without the need for costly modifications or upgrades to existing network elements and central office systems.

According to one embodiment of the teachings of the present invention, an intelligent network platform system is provided that can interface with a plurality of telephones and call processing systems. The intelligent network platform provides for flexible switching capability. The intelligent network platform is modular in nature and can, therefore, be used to service implementations having a wide variety of complexity. The intelligent network platform provides call processing services such as voice mail and messaging and provides for sophisticated system administration services to allow for maintenance, monitoring and management of the telecommunications network.

According to one embodiment of the present invention, out-of-band signalling or data-over-voice transmissions may be used to provide data transmission between premises equipment such as telephones and call processors and intelligent network platforms providing processing capability for the secured network of the present invention. Data-over-voice transmissions may be used to implement complex fraud prevention algorithms in order to secure the network of the present invention. Further, data-over-voice signalling can provide for system administration and monitoring functionalities commonly associated with more expensive SS7 networks without the implementation of costly central office and network equipment necessary for SS7 support.

According to another embodiment of the present invention, the placement of intelligent network platforms and advanced customer premises equipment in existing networks can be used to rapidly provide advanced telecommunications services without costly alteration or upgrade of the existing network equipment. For example, state-of-the-art voice mail, message delivery, information services, public and emergency services, and international and other forms of call traffic answer supervision can be performed using the intelligent network platforms of the present invention. The intelligent network platforms of the present invention are highly modular and, as such, are flexible enough to interact with any existing network system. As such, highly advanced telecommunications services may be provided by interfacing the intelligent network platforms and customer premise equipment with existing network systems without alteration of the network systems.

According to still another embodiment of the present invention, intelligent network platforms may interact with the customer premise equipment to provide for advanced fraud prevention methodologies and systems. Utilizing the processing capability of the intelligent network platforms and the processing capability of the telephones and call processing systems located on the customer premises, call authorization signalling and call progress signalling can be used to prevent fraud on the network. As such, the intelligent network platforms and advanced customer premises equipment can be used to provide for advanced secured telecommunications networks. The provisions of a secured network allows for the network to provide for a variety of prepaid and postpaid telecommunications services without being susceptible to the fraud usually associated with the provision of such services.

According to another aspect of the system of the present invention, the intelligent network platforms may be used to perform validation of prepaid telephone calls and other forms of billable telecommunications traffic. For example, prepaid accounts can be tracked using the intelligent network platforms and credit card and collect call traffic can be validated prior to the placement of the telephone calls to insure that the prepaid account, credit card account or destination telephone number are capable of paying for the requested telephone call.

According to still another aspect of the present invention, the intelligent network platforms may be used to perform least cost direction call processing. According to this aspect of the present invention, the intelligent network platforms are capable of determining if a call placed from the destination number to the originating number is less expensive than a call placed from the originating number to the destination number. If such is the case, the intelligent network platforms working in conjunction with the network can connect the call in the least expensive direction transparent to the originator of the call.

According to still another aspect of the present invention, the intelligent network platform may be used to provide prepaid telephone line services to customers that are not able to qualify for telephone service from the conventional telecommunications network. For example, a patron who may be a credit risk may purchase a prepaid telephone line which is secured and controlled by an intelligent network platform to insure that all the patron's calls are routed through the intelligent network platform and that the prepaid amount of call traffic is not exceeded by the patron.

According to still another aspect of the present invention, the intelligent network platforms may be used to bypass central office systems, common carrier systems, or both. According to this embodiment, a number of telephones can be directly connected to an intelligent network platform that itself can be coupled to communications systems such as satellite links or microwave stations. In this manner, intelligent network platforms can be used to create a completely separate telecommunications network independent of the existing common carrier networks and central office systems. Alternatively, the intelligent network platforms can be used as a termination point for trunk lines of the common carriers. In this manner, the central office systems are bypassed and intelligent network platforms can be used to switch plurality of telephone lines to common carrier trunks, to provide services without modifying the existing network.

According to still another embodiment of the present invention, the network of the present invention utilizing the intelligent network platform systems, can implement Billed Party Preference capability without using expensive central office systems. According to the teachings of the present invention, the intelligent network platform enjoys the capability of directly accessing a billed party preference database of information to retrieve the appropriate carrier associated with an identified calling party. The intelligent network platform can then either directly access the appropriate carrier or dial through the central office, and couple the calling party's call using the information retrieved from the billed party preference database.

### BRIEF DESCRIPTION OF THE DRAWINGS

A more complete understanding of the advantages associated with the present invention may be acquired by referring to the accompanying drawings in which like reference numbers indicate like features and wherein:
FIGUREs 1a and 1b are block diagrams of a telecommunications network utilizing the teachings of the present invention;
FIGURE 2 is a block diagram illustrating the modular construction of the intelligent network platform of the present invention;
FIGURE 3 is a block diagram further illustrating the modular construction of the intelligent network platform of the present invention;
FIGURE 4 is a schematic diagram of a telephone line interface circuit and a telephone network interface used in the intelligent network platform of the present invention;
FIGUREs 5a and 5b are schematic diagrams of a telephone constructed according to the teachings of the present invention;
FIGUREs 6 through 8 are diagrams of the software architecture used in the present invention;
FIGURE 9 is a diagram illustrating the relationship of the OSI protocol to the protocols used in the present invention; and
FIGURE 10 is a diagram illustrating the message protocol used in the present invention.

### DETAILED DESCRIPTION OF THE INVENTION

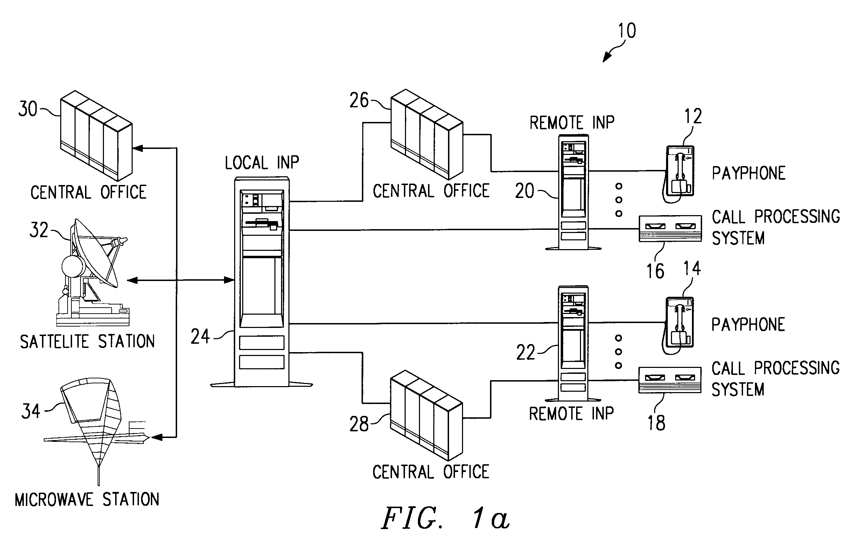

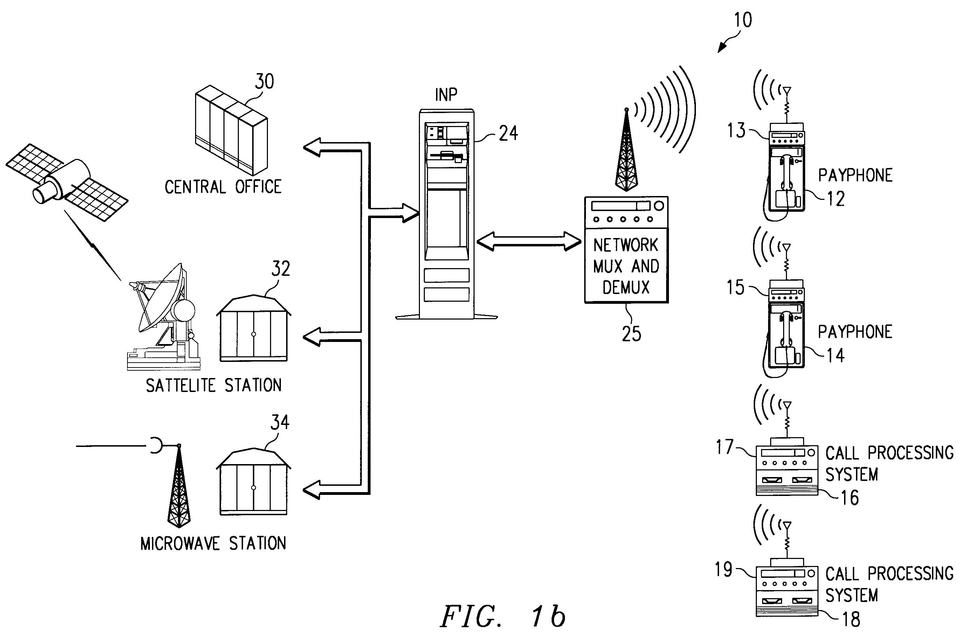

FIGURE 1a is a block diagram of a telecommunications network 10 constructed according to the teachings of the present invention. Network 10 can be conceptually divided into three groups of equipment. The first group comprises customer premise equipment, which is represented in FIGURE 1a by pay telephones 12 and 14 and call processing systems 16 and 18. The second group of equipment are intelligent network platforms which are represented by remote intelligent network platforms 20 and 22 and local intelligent network platform 24 in FIGURE 1a. The final division of network 10 may be referred to as the existing connecting network and is represented in FIGURE 1a by central office systems 26, 28, and 30 and satellite station 32 and microwave station 34.

The customer premise equipment comprising pay telephones 12 and 14 and call processing systems 16 and 18 may comprise a variety of local telecommunications devices including "dumb" and "smart" pay telephones and combinations of call processing systems and telephone terminals. The telecommunications network of the present invention enjoys the capability of providing complex telecommunications capabilities to existing telephones that have little or no processing capability themselves. In addition, the telecommunications network of the present invention especially the intelligent network platforms such as intelligent network platforms 20 and 22 shown in FIGURE 1a enjoy the capability of interacting with customer premises equipment having processing capability to implement a variety of the functions that will be described herein. For example, particular pay telephones such as pay telephone 12 may interact with an intelligent network platform such as intelligent network platform 20 to implement fraud prevention algorithms to secure network 10 from unauthorized use. The customer premises equipment such as pay telephone 12 and call processing system 16 may be coupled directly to a remote intelligent network platform such as remote intelligent network platform 20. Alternatively, the pay telephone 12 or call processing 16 can be coupled to a local intelligent network platform such as intelligent network platform 24 through a central office 26. The customer premise equipment such as pay telephone 12 and call processing system 16 may comprise complex telecommunications processing systems capable of performing automated operator services and telephone account management functions such as those described fully in U.S. Patent Nos. 4,933,965; 4,944,966; 4,890,317; 4,908,852; 4,952,588; and 4,920,562 assigned to the assignee of the present application, the disclosures of which are hereby incorporated by reference.

The second major component of network 10 comprises the connecting network systems. As described previously, these may comprise central office systems or other forms of telecommunications transmissions such as satellite stations or microwave stations. An important technical advantage of the present invention inheres in the fact that the processing capabilities within the customer premises equipment and within the intelligent network platforms of the present invention allow for these systems to interface with existing network systems to provide advance telecommunications services without alteration or upgrade of the existing networks. Because of the complexity and size of existing central office and telecommunications network systems, the economics of implementing new services on a customer-by-customer basis are formidable. For example, implementing a voice messaging system in a particular region or business sector may involve millions of dollars of equipment upgrades to the existing central office systems if traditional methods and systems are utilized. An advantage of the present invention is that services such as voice mail, message delivery and the like can be provided to particular customers without alteration or interference with the existing network structures for a fraction of the cost and time.

These advantages result in part because of the capabilities of final portion of the network 10 of the present invention, namely, the intelligent network platforms. The intelligent network platforms 20, 22 and 24 depicted in FIGURE 1a are highly modular and flexible telecommunications processing systems. Intelligent network platforms 20 and 22 comprise a variety of telecommunications switching systems, telecommunications service systems and telecommunications administration systems that are used in the operation of network 10. The terms "remote" and "local" are used herein merely to differentiate between an intelligent network platform that is coupled directly to a telephone and a platform that is coupled to a telephone through a central office on another intelligent network platform. Intelligent network platforms 20 and 22 may be coupled to a local intelligent network platform 24 through central offices 26 and 28 through conventional telecommunications lines. Further, intelligent network platform 24 can be programmed to communicate directly with intelligent network platforms 20 and 22 and may be coupled to intelligent network platforms 20 and 22 using conventional high speed data communications systems.

Intelligent network platform 24 may be coupled to other portions of a conventional telecommunications network such as another central office 30, satellite communication facilities such as satellite station 32 or microwave telecommunications communications facilities such as microwave station 34 or conventional cellular/RF connectivities. FIGURE 1a illustrates the inherent flexibility of the telecommunications network constructed according to the teachings of the present invention. The intelligent network platform systems 20, 22 and 24 are modular in construction and are extremely flexible in configuration and operation. For example, an intelligent network platform system can be located on either side of the central office and still effectively communicate with a pay telephone or call processing system as is shown in FIGURE 1. Further, an intelligent network platform such as intelligent network platform 24 can be programmed to respond to an intelligent network platform such as intelligent network platform 20 as if the intelligent network platform 24 were a central office.

One advantage in positioning an intelligent network platform such as intelligent network platform 20 in direct communication with a telephone or call processing system such as pay telephone 12 or call processing system 16 without having a central office between intelligent network platform 20 and pay telephone 12 or call processing system 16 is that out-of-band or data-over-voice communications may take place. By using regular telephone lines and frequencies far above the voice communication bandwidth and switching frequencies far below the voice communication bandwidth, data can be transmitted simultaneously with voice communication between pay telephone 12 or call processing system 16 and intelligent network platform 20. This data communication can be used to prevent fraud on the telecommunications network 10 or to transmit status information in either direction. Using conventional in-band signalling prior to the initiation of a telephone call, fraud prevention algorithms can be implemented as in Patent Application Serial No. 07/944,166 for "TELECOMMUNICATIONS FRAUD PREVENTION SYSTEM AND METHOD" assigned to the assignee of the present application, the disclosure of which is hereby incorporated by reference. The out-of-band or data-over-voice communication facilities provided by the present invention can be used in addition to the fraud prevention methods and systems described therein. In addition, intelligent network platform 20 can receive or transmit rate information or other information that is needed during the processing of the telephone call. In general, the out-of-band or data-over-voice communication provides signalling and communication capabilities to the network 10 similar to what is found in SS7 signalling in advanced telecommunications network environments. These capabilities are provided without the lengthy and costly implementation of the SS7 functionality and central office environments by providing this capability between the customer premises equipment and the intelligent network platforms of the present inventions.

If a single intelligent network platform such as intelligent network platform 24 is connected to a pay telephone such as pay telephone 12 through a central office 26 without intelligent network platform 20 being present, the intelligent network platform 24 and the pay telephone 12 can still communicate effectively to process calls and administer the telecommunications network 10. However, the positioning of central office 26 between the intelligent network platform 24 and the pay telephone 12 will eliminate the outside bandwidth serial datalink discussed previously as conventional central office systems will not pass on signals outside of the normal voice bandwidths.

The modular construction of the intelligent network platform 20, 22 and 24 enables the intelligent network platforms to fill the various roles identified in network 10 described with reference to FIGURE 1. Further, the flexibility of the modular construction of intelligent network platforms, such as intelligent network platform 24, allows the system 10 to be "network independent" in that the telecommunications system 10 can interface with any conventional telecommunications network by altering the interface circuitry within intelligent network platform 24, for example. Intelligent network platform 24 may comprise microwave transceivers, satellite communications interfaces, or conventional fiber or land line interfaces to communicate with conventional central office systems. Other telecommunications network facilities, such as cellular communications and radio communications, may also be interfaced to intelligent network platform 24 by including the required interface systems within the modular construction of a particular implementation of the intelligent network platform 24. In this manner, the intelligent network platform systems in conjunction with intelligent pay telephones and call processing systems can be used to rapidly deploy telecommunications services to areas in need of primary telecommunications systems or telecommunications system upgrades. The flexibility of the intelligent network platform allows for it to interface with whatever communications facilities are already in place.

Referring to FIGURE 1b, an alternate embodiment of network 10 is illustrated where an intelligent network platform 24 communicates with pay telephones 12 and 14 and call processing systems 16 and 18 through cellular systems. Intelligent network platform 24 may be coupled to a network MUX and DEMUX facility 25. Further, pay telephones 12 and 14 are respectively coupled to cellular transceivers 13 and 15 shown in FIGURE 1b. Similarly, call processing systems 16 and 18 are coupled to cellular transceivers 17 and 19 as shown in FIGURE 1b.

According to this embodiment, for example, the link between intelligent network platform 20 and pay telephone 12 utilizes a conventional cellular link. Using the embodiment shown in FIGURE 1b, a modern telecommunications network can be made operational in an area with no land line capability whatsoever. Answer supervision to cellular payphones and cellular call processing systems can be provided using the intelligent network platform 20. The intelligent network platform 20 transfers a hard answer supervision to cellular payphones and call processing systems through in band or out of band signalling. The intelligent network platform 24 can receive signals from the cellular pay telephones 12 and cellular call processing system 16 and can directly interface with central office 30, satellite station 32, or microwave station 34 to complete communication with remote portions of the network.

In accordance with the teachings of the present invention, a modular telecommunications system is provided that substantially eliminates or reduces disadvantages associated with prior art systems. A secured telecommunications network environment is provided that consists of highly flexible and modular intelligent network platforms. These platforms may provide rapid deployment of telecommunications services without the need for costly modifications or upgrades to existing network elements and central office systems. An intelligent network platform system is provided that can interface with a plurality of telephones and call processing systems. The intelligent network platform provides for flexible switching capability. The intelligent network platform is modular in nature and can, therefore, be used to service implementations having a wide variety of complexity. The intelligent network platform provides call processing services such as voice mail and messaging and provides for sophisticated system administration services to allow for maintenance, monitoring and management of the telecommunications network.

Out-of-band signalling or data-over-voice transmissions may be used to provide data transmission between premises equipment such as telephones and call processors and intelligent network platforms providing processing capability for the secured network of the present invention. Data-over-voice transmissions may be used to implement complex fraud prevention algorithms in order to secure the network of the present invention. Further, data-over-voice signalling can provide for system administration and monitoring functionalities commonly associated with more expensive SS7 networks without the implementation of costly central office equipment necessary for SS7 support.

The placement of intelligent network platforms and advanced customer premises equipment in existing networks can be used to rapidly provide advanced telecommunications services without costly alteration or upgrade of the existing network equipment. For example, state-of-the-art voice mail, message delivery, information services, public and emergency services, and international and other forms of call traffic answer supervision can be performed using the intelligent network platforms of the present invention. The intelligent network platforms of the present invention are highly modular and, as such, are flexible enough to interact with any existing network system. As such, highly advanced telecommunications services may be provided by interfacing the intelligent network platforms and customer premise equipment with existing network systems without alteration of the network systems. Intelligent network platforms may interact with the customer premise equipment to provide for advanced fraud prevention methodologies and systems. Utilizing the processing capability of the intelligent network platforms and the processing capability of the telephones and call processing systems located on the customer premises, call authorization signalling and call progress signalling can be used to prevent fraud on the network. As such, the intelligent network platforms and advanced customer premises equipment can be used to provide for advanced secured telecommunications networks.

The provisions of a secured network allows for the network to provide for a variety of prepaid telecommunications services without being susceptible to the fraud usually associated with the provision of such services. Intelligent network platforms may be used to perform validation of prepaid telephone calls and other forms of billable telecommunications traffic. For example, prepaid accounts can be tracked using the intelligent network platforms and credit card and collect call traffic can be validated prior to the placement of the telephone calls to insure that the prepaid account, credit card account or destination telephone number are capable of paying for the requested telephone call. Intelligent network platforms can similarly be used to process calls placed using prepaid accounts accessed using Personal Identification Numbers (PINs). The PINs can be validated and the account balances monitored using the processing capability of the intelligent network platform described previously.

Intelligent network platforms may be used to perform least cost direction call processing. Intelligent network platforms are capable of determining if a call placed from the destination number to the originating number is less expensive than a call placed from the originating number to the destination number. If such is the case, the intelligent network platforms working in conjunction with the network can connect the call in the least expensive direction. The intelligent network platform may be used to provide prepaid telephone line services to customers that are not able to qualify for telephone service from the conventional telecommunications network. For example, a patron who may be a poor credit risk may purchase a prepaid telephone line which is secured and controlled by an intelligent network platform to insure that all the patron's calls are routed through the intelligent network platform and that the prepaid amount of call traffic is not exceeded by the patron.

Intelligent network platforms may be used to bypass central office systems, common carrier systems, or both. A number of telephones can be directly to an intelligent network platform that itself can be coupled to communications systems such as satellite links or microwave stations. In this manner, intelligent network platforms can be used to create a completely separate telecommunications network independent of the existing common carrier networks and central office systems. Alternatively, the intelligent network platforms can be used as a termination point for trunk lines of the common carriers. In this manner, the central office systems are bypassed and intelligent network platforms can be used to switch plurality of telephone lines to common carrier trunks.

The network of the present invention utilizing the intelligent network platform systems, can implement billed party preference capability without using expensive central office systems. The intelligent network platform enjoys the capability of accessing a billed party preference database of information to retrieve the appropriate carrier associated with an identified calling party. The intelligent network platform can then directly access the appropriate carrier and couple the calling party's call using the information retrieved from the billed party preference database.

According to one embodiment of the present invention, automated operator services may be provided to "dumb" customer premises equipment that lacks substantial processing capability by centralizing these operations in an intelligent network platform coupled to the equipment. Such automated services may comprise, for example, automated collect calls and the like as described in the U.S. Patent Nos. 4,933,965; 4,944,966; 4,890,317; 4,908,852; 4,952,588; and 4,920,562, assigned to the assignee of the present application, the disclosures of which are hereby incorporated by reference. For example, an intelligent network platform can receive a request for a telephone call dialed in a 0+ format and convert the call to a direct dial call after obtaining and verifying a mode of payment from the patron. Further, the intelligent network platform may comprise the necessary systems to complete an automated collect call by recording the patron's name, placing a direct dial call to the called party and paying back the recorded name. The intelligent network platform can then prompt the called party using stored speech messages and complete the call if the called party accepts responsibility for charges associated with the call. These and other advanced automated services can be provided to a multiplicity of telephones using a single central intelligent network platform constructed according to the teachings of the present invention.

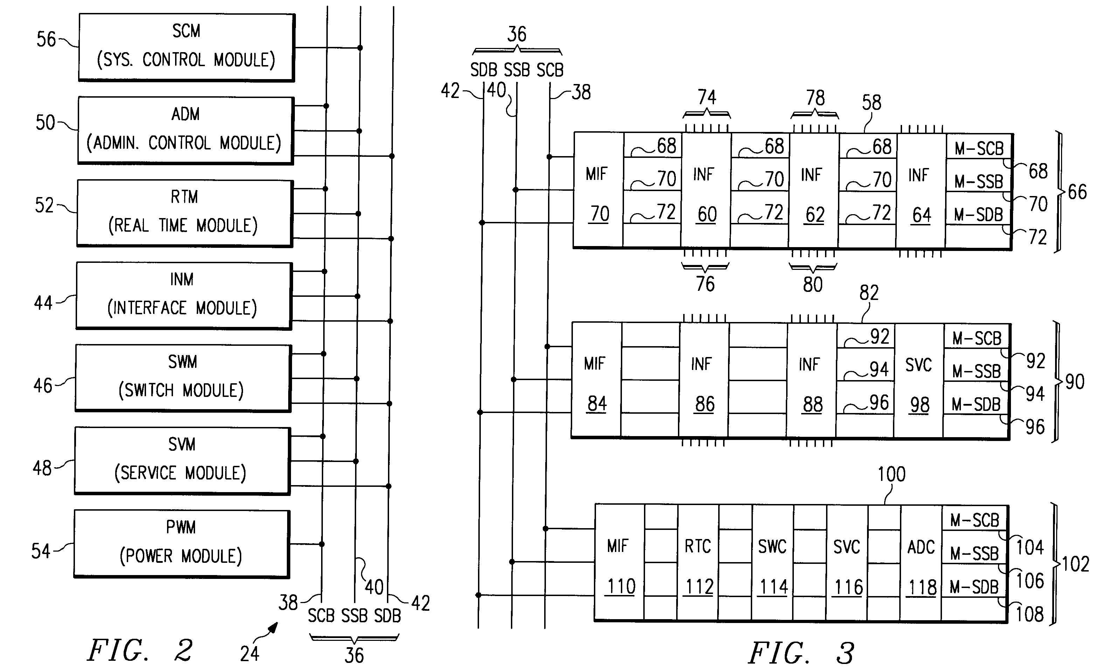

FIGURE 2 is a schematic illustration showing details of one possible embodiment of intelligent network platforms 20, 22, and 24 constructed according to the teachings of the present invention. FIGURE 2 illustrates the modular construction comprising a plurality of independent modules connected using a multi-channel bus 36. Multi-channel bus 36 comprises a system control bus 38 and a system supervisory bus 40 and a system data/voice bus 42. System control bus 38 and system supervisory bus 40 may comprise conventional computer data communications channels such as RS 232 serial communication links or local area network communication links using conventional message passing methods and systems. System data/voice bus 42 may comprise a conventional PCM highway that is time-multiplexed for telephone call and control signal traffic. As described previously, intelligent network platform 24, comprises a plurality of independent modules coupled together through multi-channel bus 36. As shown in FIGURE 2, these modules comprise an interface module 44, a switch module 46, a service module 48, an administrative control module 50, a real time module 52, a power module 54 and a system control module 56. Interface module 44 contains certain local switching capability and generally functions to provide the interface to the various telecommunications links coupled to the intelligent network platform 24. The switch module 46 provides for switching between incoming and outgoing telecommunications links and between telecommunications links and services provided by other systems within the intelligent network platform such as voice prompts, messaging facilities and the like. Service module 48 comprises a class of modules providing any number of telecommunications facilities such as facilities as complex as voice mail to those as widely utilized as DTMF tone detection and generation. Administrative control module 50 serves to administer the configuration of the remaining systems as well as serving to manage databases of information such as billing records and system traffic and the like. Real time module 52 serves to manage the real time switching and other functions required in the moment-by-moment routing and handling of call traffic. Power module 54 provides power to the remaining modules within intelligent network platform 24 and can be used to provide power to live powered payphones connected to the intelligent network platform. In addition, power module 54 can provide ringing signals and ringing voltage to the payphones or other telephone instruments connected to the intelligent network platform 24. System control module 56 serves to monitor the sanity of the remaining systems and in doing so monitors and creates control and alarm signals necessary to maintain the integrity and smooth operation of the intelligent network platform 24.

The first of the modules that will be described is an interface module 44 which is coupled to each of system control bus 38, system supervisory bus 40, and system data/voice bus 42. Interface module 44 comprises a plurality of interface boards that will be described more completely herein. Each of the interface boards may be coupled to, for example, six telephone lines and six central office lines. Each of the interface boards has the ability to couple any of the six telephone lines to any of the six central office lines through internal inherent switching capabilities. Further, as will be described more completely herein, the interface module 44 has switching capabilities such that telephone and central office lines associated with interface boards within a single interface module 44 can be switched and selectively coupled together. Further, intelligent network platform 24 may comprise a number of interface modules identical to interface module 44 if a large number of lines are required. Using the internal switching capabilities of the interface module 44 up to three interface modules can perform switching of any of the telephone and central office lines serviced by the three interface modules. If greater than three interface modules such as interface modules 44 are required in a particular implementation, a switch module such as switch module 46 shown in FIGURE 2, is included to perform additional switching capabilities. As such, the intelligent network platform 24 enjoys the capability of four levels of telecommunications switching. First, the interface cards which form interface module 44 have intracard switching capability to connect any of the six telephone lines to any of the six central office lines directly coupled to a particular card. Second, the interface module 44 allows for intramodule/intercard switching between neighboring cards in a single interface module 44. Third, the interface modules contain the necessary processing capability to switch between up to three interface module without assistance. Fourth and last, if greater than three interface modules are included in a particular intelligent network platform 24, a switching module 46 can be included to assist in further switching between the telephone lines and central office lines serviced by the number of interface modules 44. This multi-level switching capability allows for tremendous flexibility in meeting particular telecommunications network needs. Further, the modularity of the construction of the intelligent network platform 24 allows for the same module or architecture to be used in a variety of switching and telecommunications network system functions. Because of the modular nature of the intelligent network platform 24, essentially the same piece of equipment can be configured to be an extremely sophisticated and complex switch or can be configured with less switching capability and be configured by adding other modules to provide administrative and sophisticated automated operator services. The interface cards within interface module 44 may comprise conventional telephone line interface modules, analog or digital trunk line interface modules, or SS7 link interface modules depending upon the nature of the particular lines coupled to each of the respective interface cards. Interface cards also provide signal buffering and other conventional telecommunication data processing functions.

Switch module 46 may comprise a conventional digital crosspoint switch which may be of a size 8 x 8 to on the order 512 x 512 or larger. As described previously, switch module 46 serves to couple telephone lines to central office lines or other phones. Switch module 46 also serves to couple ingoing and outgoing telecommunications pathways to one or more service modules such as service module 48 shown in FIGURE 2. Service module 48 may comprise a variety of resources necessary for the placement of telephone calls and the performance of automated operator services. For example, service module 48 may provide DTMF and MF generation and detection circuitry, speech message recording and playback circuitry and speech memory to store digitized speech prompts and messages. Service module 48 may also comprise circuitry capable of performing answer detection using signals travelling over telephone lines 24. Service module 48 may further comprise systems to provide voice recognition functionality or other complex functionalities shared by the remainder of the intelligent network platform 24. Intelligent network platform 24 may comprise a number of service modules 48 which may individually serve general or specific functions. For example, a single service module 48 may be dedicated to providing voice mail systems and may comprise the speech circuitry, processing circuitry, and message storage circuitry necessary to provide voice mail services.

Intelligent network platform 24 further comprises an administrative module 50 which is coupled to the remaining modules within intelligent network platform 24 through the system control bus 38, system supervisory bus 40 and a system data/voice bus 42. Administrative module 50 functions to control the operation of intelligent network platform 24 and may comprise a conventional 386 or 486 compatible personal computer comprising central processing systems data communications systems and large scale and short term memory systems. Administrative module 50 may comprise the memories systems used in the fraud prevention protocols described in patent application Serial No. 07/944,166 assigned to the assignee of the present invention, the disclosure of which is hereby incorporated by reference. Administrative module 50 allows for user interaction with the intelligent network platform 24 to perform system configuration monitoring, system service, and system upgrades. It should be understood that administrative module 50 also benefits from the modular nature of the architecture of the present invention. For example, a particular implementation of an intelligent network platform 24 may utilize several special purpose administrative modules 50 controlled by a single master administrative module. Special purpose administrative modules might function as file servers to administer large databases of information which may be used, for example, for validation of billing account numbers used in placement and billing of, for example, credit card telephone calls, debit card telephone calls, PIN calls, or smart card telephone calls.

According to one embodiment of the present invention, the database management system administered by an administrative module 50 may comprise a validation interface computer system constructed by Intellicall, Inc. and fully described in U.S. Patent Nos. 4,933,965; 4,933,966; 4,890,317; 4,908,852; 4,952,588; and 4,920,562 assigned to the assignee of the present invention, the disclosures of which are hereby incorporated by reference. In operation, administrative module 50 functions to access databases to validate credit card numbers, telephone numbers and other billing account numbers used in the placement of billable telecommunications traffic. According to one embodiment of the present invention, the intelligent network platform 24 through the use of an administrative module 50 can operate to route telephone traffic billed to prepaid smart cards or to plain magnetic cards. According to this embodiment, a customer of a telecommunications network may purchase a prepaid telecommunications debit card. The card can either be a plain plastic card with a magnetic strip identifying the card, a smart card having an integrated circuit chip on the card that stores the value remaining on the card, or an "opto-card" such as those manufactured by Landis and GYR Technology. In operation, the patron of the telecommunications network 10 illustrated in FIGURE 1 would insert his card into a card reader at a pay telephone such as pay telephone 12 illustrated in FIGURE 1. The pay telephone 12 would read the identification off of the patron's card and upload that information via conventional telecommunications techniques to the intelligent network platform 24 and administrative module 50 administrating a database of card numbers. The intelligent network platform 24 and administrative module can then check the database to verify that the card may be used to place telecommunications traffic. If the card includes memory systems to store a value for the card, the local telephone 12 can also retrieve the value remaining on the card and upload that information to the intelligent network platform 24 as well. The intelligent network platform 24 can then monitor the call and insure that the amount of money remaining on the card is not exceeded during the telephone call. At the completion of the telephone call, the intelligent network platform 24 can instruct the telephone to decrement the amount of money stored on the card and the telephone will then write the appropriate amount of money to the card. The intelligent network platform 24 may also store the amount of money associated with the card in its own database to use as a further check for later calls placed using the card. In this manner, the amount of money assigned to a particular card at any time is accessible to both the intelligent network platform 24 using the central database of card values and to the local telephone by retrieving the value from the patron's card.

According to an alternate embodiment of the present invention, a debit card is used that does not contain the circuitry for storing the amount of money associated with the card on the card. According to this embodiment, the card merely contains a magnetic or optical identifier strip or the like which can be read using a magnetic or optical card reader or other conventional systems by the telephone 14. This identifier is then uploaded to the intelligent network platform 24 which can access a central database to find an amount of money associated with the particular card. According to this embodiment, the intelligent network platform 24 verifies that the card number uploaded from the telephone 14 is a valid one and that it is associated with a sufficient amount of money to place the call desired. The intelligent network platform 24 further monitors the call to insure that the charges for the call do not exceed the amount of money stored on the card. At the completion of the call, the database entry associated with the particular is decremented to reflect the charges associated with the call. This embodiment enjoys the technical advantage that no writing of information to the card is required and therefore the equipment within the telephone 14 is considerably less expensive and more reliable. In this manner, the use of electrical current is greatly minimized. As such, magnetic debit cards can be provided in line-powered telephones, eliminating the need to provide A/C power to the local telecommunications device. It should be understood that, using the teachings of the present invention, smart card systems can also be used in conjunction with line powered phones. The processing capability within the intelligent network platform 24 allows for centralized control and access to the database of card values to facilitate monitoring of the database and accounting for card customers whether smart cards, magnetic debit cards, optical cards or other card technology is used.

An important technical advantage of the present invention inheres in the fact that the three main card technologies are all supportable by the present invention in that the present invention can utilize the capabilities of magnetic strip cards, smart cards or optical cards. A key advantage of the present invention inheres in the fact that inexpensive magnetic cards can be used with the same security level or better than provided by the more expensive optical cards. This is possible due to the fact that the processing capabilities inherent in the intelligent network platform and the local telecommunications device provides for an absolutely secured network by using the fraud prevention methods and systems described herein and in application Serial No. 07/944,166 discussed previously. In this manner, completely secure prepaid card telephone calls can be placed on line-powered telephones using systems which are much less expensive.

Intelligent network platform 14 also may comprise a real time module 52 which is coupled to the remaining modules within intelligent network platform 24 through system control bus 38, system supervisory bus 40 and system data/voice bus 42. Real time module 52 may be used to offload the real time work of call processing from the administrative module 50 to eliminate the cost of repetition of the unneeded resources within a particular administrative module 50. Module 52 functions to perform the administration of telephone traffic through the intelligent network platform 24. For example, the switch module 48 may operate under the control of the real time module 52 to connect particular incoming and outgoing telephone lines or to connect particular resources in a service module 48 to telephone calls requiring that resource. Referring again to FIGURE 2, according to certain embodiments of the present invention, administrative modules 50 may be dedicated to the administration of other modules. For example, a single administrative module 50 may be dedicated to the administration of a service module 48 in order to optimize the use of the resources provided by the particular service module. Further, a single administrative module 50 may be dedicated to the administration of a predetermined plurality of interface modules 44. These dedicated administrative modules can then be administrated by an additional administrative control module 50 to create a pyramid-shaped control scheme. In this manner, the module architecture illustrated in FIGURE 2 easily allows for expansion and optimization of system resources for particular telecommunications environments.

Intelligent network platform 24 also comprises a power module 54 shown in FIGURE 2. Power module 54 is coupled to the system control bus 38 and operates to supply various voltages to the remaining modules. For example, power module 54 may supply -48 volt DC and 96 volt DC for telecommunications loop current applications and may also supply conventional logic level voltages such as ±5 volts for digital circuits resident in the remaining modules within intelligent network platform 24. Power module 54 can also supply power to line powered phones and supply ringing signals and ringing voltage to instruments connected to the intelligent network platform 24. Power module 54 is coupled to the remaining modules within intelligent network platform 24 through system control bus 38 of multi-channel bus 36.

Intelligent network platform 24 also comprises a system control module 56 which is coupled to the remaining modules within intelligent network platform 24 through the system supervisory bus 40. System control module 56 functions to monitor the sanity of the remaining modules within intelligent network platform 24 and performs emergency system functions if certain alarm contentions are detected within intelligent network platform 24. System control module 56 also functions to help initialize the system at power-up and to preserve the status and integrity of the system in case of emergency shutdown.

FIGURE 3 is a schematic block diagram illustrating the interconnection of several modules within an exemplary intelligent network platform. FIGURE 3 once again illustrates the multi-channel bus 36. As discussed previously, multi-channel bus 36 comprises a system control bus 38, a system supervisory bus 40 and a system data/voice bus 42. FIGURE 3 illustrates the manner in which the multi-channel bus 36 is communicated to cards forming each module by using internal busses which parallel the structure of the multi-channel bus 36. For example, FIGURE 3 illustrates an interface module 58 which comprises interface cards 60, 62 and 64. Interface cards 60, 62 and 64, each coupled to a modular multichannel bus indicated generally at 66. Modular multichannel bus 66 comprises a modular system control bus 68 which is generated by a module interface circuit 70 which operates to interface the system control bus 38 with the modular system control bus 68. The modular system control bus 68 is transmitted to each of the interface cards 60, 62 and 64. Similarly, a modular system supervisory bus 70 and a modular system data/voice bus 72 are transmitted by modular interface card 70 to each of interface card 60, 62 and 64 and served to allow communication between the interface cards 60, 62 and 64 with the system supervisory bus 40 and the system data/voice bus 42.

As discussed previously, the interface cards are coupled to, for example, six telephone lines and six central office lines. For example, interface card 60 is coupled to central office lines indicated at 74 and telephone lines indicated at 76. Similarly, interface card 62 is coupled to telephone lines 78 and central office lines 80. As discussed previously, interface card 60 has the capability to switch any of the telephone lines 74 to any of the central office lines 76. This is the first level of switching inherent in the present invention and has been referred to previously as intracard switching. The capabilities of interface cards 60 and 62 together with the modular multi-channel bus 66 have the capability to perform intramodule/intercard switching. For example, any of lines 74 can be connected to any of lines 80 without the assistance of switching hardware resident in the remainder of the intelligent network platform system.

Module 82 is also connected to multi-channel bus 36 through a module interface 84. Module 82 is similar to module 58 in that it contains interface cards 86 and 88 which are coupled to telephone lines and central office lines as discussed previously. Further, module 82 also contains a module multi-channel bus 90 which comprises a module system control bus 92, a module system supervisory bus 94 and a module system data-over-bus bus 96 coupled to interface card 86, interface card 88 and to a service card 98. Module 82 illustrates the capability of the system of the present invention to incorporate service cards into other modules to locally supply shared services to cards within a particular module or within neighboring modules using the inherent intermodule switching capability of the system of the present invention. For example, service card 98 may provide the services previously described with conjunction to service module 48 to other cards within module 82 and to a limited number of other neighboring modules without the assistance of switching hardware resident in the remainder of the intelligent network platform. For example, service card 98 may supply DTMF and MF signal generation and detection, voice recognition and voice message storage and retrieval services for calls processed by module 82 in neighboring modules. Service card 98 communicates with the remainder of the system via the modular multi-channel bus 90 and the multi-channel bus 36.

FIGURE 3 also illustrates a module 100 which also comprises a modular multi-channel bus 102 comprising a module system control bus 104, a module system supervisory bus 106 and a module system data/voice bus 108. The cards within module 100 communicate with the remainder of the system through a module interface card 110 which couples the module multi-channel bus 102 to the multi-channel bus 36 as described previously. Module 100 illustrates the capability of the system of the present invention to contain heterogenous cards within a single module. For example, module 100 comprises a real time card 112, a switching card 114, a service card 116 and an administrative card 118. Real time card 112 provides functions similar to those described with respect to real time module 52 described previously. Real time card utilizes modular multi-channel bus 102 and multi-channel bus 36 to communicate the remaining cards within module 100 and with cards in remaining modules, respectively. Similarly, switch card 114, service card 116 and administrative card 118 locally provide the functionality described with reference to switch module 46, service module 48 and administrative module 50, respectively. As described previously, for more complex systems, entire modules can be dedicated to providing particular services or administrative functions. Accordingly, module 100 might contain a plurality of service cards, each providing different functions in, for example, a complex state-of-the-art voice mail system. According to other embodiments of the present invention, an entire module might be dedicated to administrative functions and the different cards within a particular module may comprise different portions of a fully functional computer system dedicated to administration of the remaining portions of the intelligent network platform. Any of these cards can efficiently interface and communicate with the remainder of the system using the module multi-channel bus and intermodule multi-channel bus 36 described with reference to FIGURE 3.

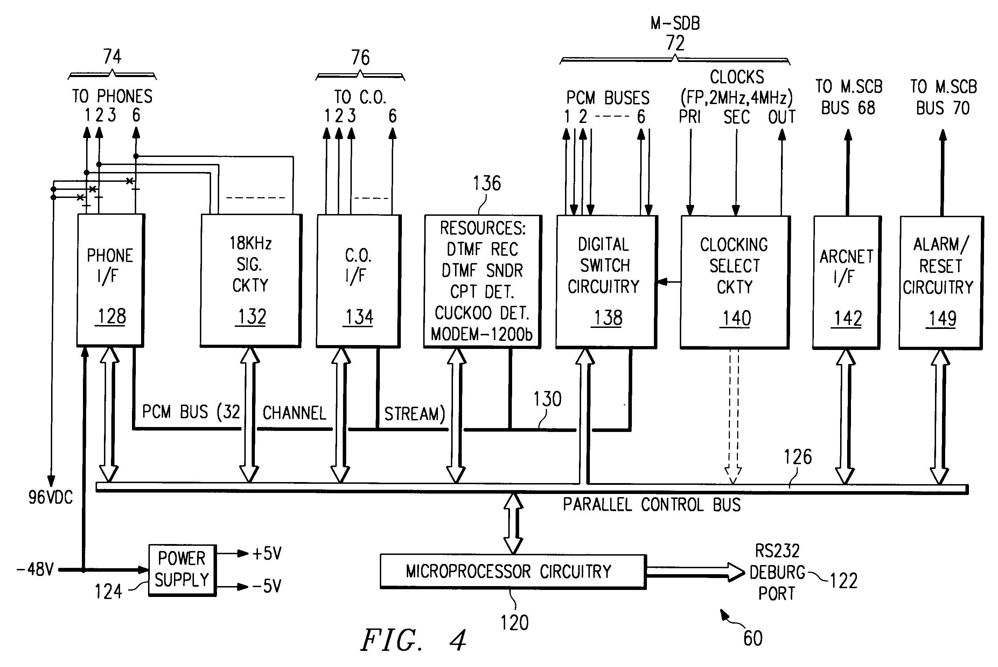

FIGURE 4 is a schematic diagram of an exemplary interface card 60 discussed with reference to FIGURE 3 previously. Interface card 60 comprises microprocessor circuitry 120 which may comprise, for example, a 16-bit microprocessor such as the Motorola 68340. Microprocessor circuitry 120 comprises a debug port 122 which may be used for configuration and testing of the software used to operate microprocessor circuitry 120. Interface card 60 further comprises a power supply 124 which receives 48-volt power from the modular system control bus 68 and outputs ±5 volt digital supply voltages to microprocessor circuitry 120 and to the remaining digital circuitries within interface card 60. Microprocessor circuitry 120 communicates with the remainder of the circuitry within interface card 60 through a parallel control bus 126. Parallel control bus 126 is coupled to a telephone line interface circuit 128. Telephone line interface circuit 128 is coupled to, for example, six telephone lines. Telephone interface circuit 128 is also coupled to a conventional 32-channel PCM bus 130 which is used to convey voice and in-band data transmissions over the telephone and central office lines coupled to interface card 60.

Out-of-band or data-over-voice communications are achieved by 18 kHz signal circuitry 132 which is coupled between the telephone lines indicated generally at 74 and the parallel control bus 126. The central office lines indicated generally at 76 are interfaced to the PCM bus 130 through central office line interface circuitry 134 shown in FIGURE 4. Central office line interface circuitry 134 receives control signals through parallel control bus 126 through microprocessor circuitry 120 to control the interface between the central office lines 136 and the PCM bus 130.

Interface card 60 further comprises a plurality of resource circuits indicated at 136 in FIGURE 4. Resource circuits 136 may comprise, for example, DTMF receivers, DTMF senders, call progress tone detectors, other special tone detectors such as cuckoo detectors, and communications circuitries such as, for example, a 1200 Baud modem. Resource circuits 136 locally provide telecommunications resources. Resource circuits 136 are controlled via control signals received from microprocessor circuitry 120 through parallel control bus 126. Resource circuits 136 are coupled to either telephone line 74 or central office lines 76 through digital switch circuitry 138 and PCM bus 130. Digital switch circuitry 138 may comprise a 32 x 16 channel switching matrix. Digital switch circuitry 138 is controlled by microprocessor circuitry 120 via control signals transmitted through parallel control bus 126. Digital switch circuitry 138 also serves to couple PCM bus 130 to the PCM bus portion of modular system data and voice bus 72.

Digital switch circuitry 138 also receives clocking signals from clocking select circuitry 140. Clocking select circuitry 140 supplies clock signals to the remaining circuits through parallel control bus 126. Clocking select circuitry 140 receives primary and secondary clock signals from the modular system data and voice bus 72. Clocking select circuitry 140 also outputs a clock signal through modular system data and voice bus 72.

Interface card 60 is monitored via the modular system control bus 68 which is coupled to the parallel control bus 126 through an interface circuit 142.

Interface card 60 also comprises an alarm and reset circuit 149. Alarm and reset circuit 149 is coupled to the parallel bus 126 and is controlled by the microprocessor circuit 120 via bus 126. Alarm and reset circuit 149 operates to locally display alarm and reset conditions and to report such conditions to the remainder of the system via the system supervisory bus 70. Alarm and reset circuit 149 also receives emergency control signals, such as, for example, the full system reset signal, via the system supervisory bus 70. Alarm and reset circuit 70 will cause the indicated function, such as full reset to occur on interface card 60.

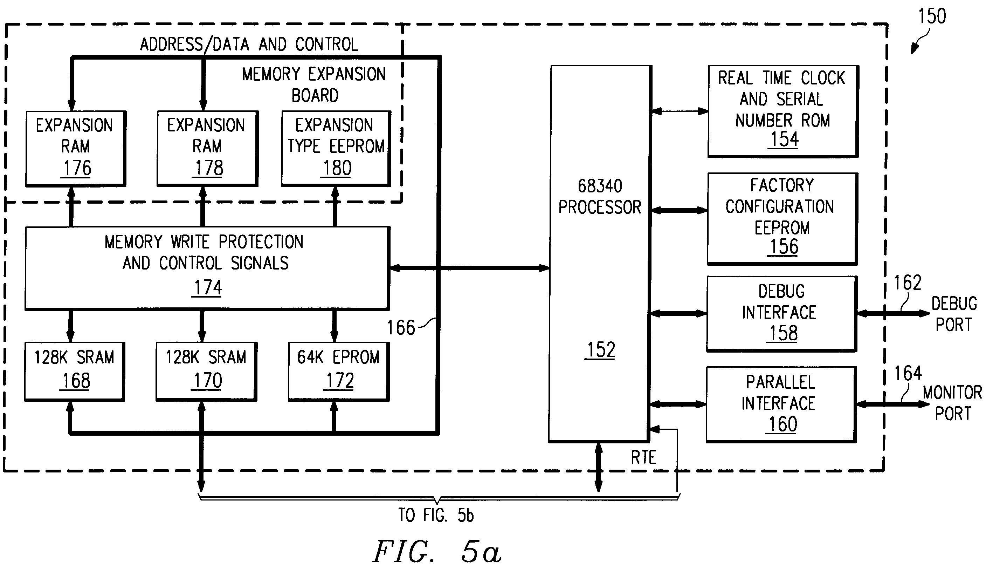

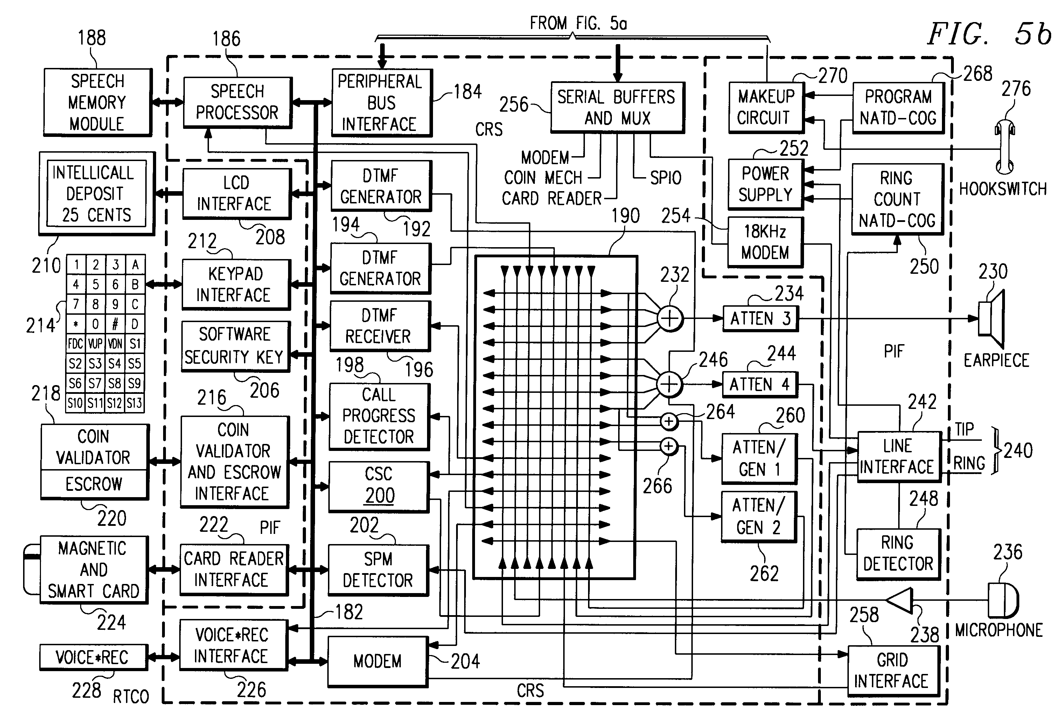

FIGURE 5 is a schematic block diagram of an intelligent pay telephone indicated generally at 150. Telephone 150 comprises a processor 152 which may comprise, for example, a Motorola 68340 16-bit processor. Processor 152 is coupled to a real time clock and serial number ROM circuit 154 which supplies the real time for the processor and also stores the serial number of the telephone 150. Processor 152 is also coupled to a factory configuration EEPROM 156 which is used to store configuration data for the telephone 150. Processor 152 may be accessed from outside of the telephone 150 through a debug interface 158 and a parallel interface 160. Debug interface circuit 158 serves to couple the processor 152 to a debug port indicated at 162. Debug port 162 is used to place the processor 152 and the telephone 150 into test mode and isolate and correct faults in the operation of the telephone 150. Similarly, the parallel interface circuit 160 serves to couple processor 152 to a monitor port 164. Monitor port 164 is used to examine the operation of the processor 152 and telephone 150 during testing and normal operation.

Processor 152 is coupled to 16 bits of address lines and 16 bits of data and control lines which are collectively shown as parallel bus 166 in FIGURE 5. Parallel bus 166 serves to couple processor 152 to first and second static random access memory circuits 168 and 170. Memory circuits 168 and 170 may each comprise, for example, 128 kilobytes of conventional static RAM. Further, parallel bus 166 couples processor 152 to an EPROM circuit 172 which may comprise, for example, 64 kilobytes of electrically programmable read-only memory. Memory circuits 168, 170 and 172 are controlled in part by a memory write protection and control circuit 174 which is also coupled to parallel bus 166. Memory write protection and control circuit 174 controls access to memory circuits 168, 170 and 172 and prevents data stored in memory from being overwritten. Memory write protection and control circuit 174 also aids in the use of expansion memory. Additional memory such as expansion, random access memory circuits 176 and 178 may be accessed utilizing memory write protection and control circuit 174 and through parallel bus 166. In addition, memory write protection control circuit 174 can be used to control an expansion EEPROM circuit 180. Memory circuits 168, 170, 172, 176, 178 and 180 serve to store routines and data used by processor 152 and, in general, comprise the work space for programs run by processor 152 and are used to store the various data necessary to operate the sophisticated telecommunications functionalities performed by telephone 150.

Parallel bus 166 is coupled to a peripheral bus 182 through a peripheral bus interface circuit 184. In general, the peripheral bus 182 and peripheral bus interface circuit 184 serve to couple the processing engine discussed previously which comprises processor 152 and its memory to interfaces that couple the processor 152 to the outside world and resources used by the processor 152 to perform its functions. For example, peripheral bus 182 serves to couple a speech processor circuit 186 to the remainder of circuitry within telephone 150. Speech processor circuit 186 is coupled to a speech memory module 188. Speech processor circuit 186 records human speech and retrieves voice messages, during the progress of telecommunications traffic processed using telephone 150. Speech memory module 188 stores voice prompts used to prompt users of telephone 150. Speech memory module 188 is also used to store certain speech of the user. For example, the name of the user is recorded during the placement of an automatic collect call. Speech processor 186 may be selectively coupled to incoming voice signals received from the handset and may be coupled to the speaker within the handset in order to play voice prompts through an audio switching matrix 190 shown in FIGURE 5. As will be discussed herein, audio switching matrix 190 operates to couple any number of input signals and resources to output paths and to couple received signals to resources within telephone 150 used to process those received signals.

Peripheral bus 182 is coupled to a first DTMF generator circuit 192 and a second DTMF generator circuit 194. DTMF generator circuits 192 and 194 operate under the control of processor 152 to generate dual-tone multi-frequency signals for use in processing telecommunications traffic through telephone 150. For example, DTMF tones are often used to signal the numbers being dialed by the telephone 150. Peripheral bus 182 is also coupled to a DTMF receiver 196 which is operable to receive and interpret dual-tone multi-frequency signals received through the telephone line. DTMF tones can be used, for example, in automatic collect calls to allow the called party to instruct the telephone 150 whether or not the called party accepts charges for the telephone call by pressing particular keys as prompted by telephone 150. As shown in FIGURE 5, the received DTMF tones are routed to DTMF receiver 196 through the audio switch matrix 190 from the telephone line coupled to telephone 150. Peripheral bus 182 is also coupled to a call progress detector 198. A call status circuit 200, and a special metering pulse detector circuit 202. Call progress detector 198 comprises an energy detector which monitors the energy on the telephone line connected to telephone 150. Call progress detector 198 detects and characterizes signals between 350 and 620 Hz. Many of the conventional call progress signals, such as dial tone and busy signals, reside within this frequency range. Call status circuit 200 also monitors the signals on the telephone line coupled to telephone 150. Call status circuit 200 detects a variety of signals transmitted on telephone lines including special information tones, ring-back tones, busy tones and fast busy tones. Call status circuit 200 also comprises two programmable tone detectors which can detect preselected frequencies and return signals indicating whether signals of the preselected frequencies are present or not. These programmable tone detectors can be used to flexibly adjust to different telecommunications protocols and for detecting modem tones, for example. The processor 152 utilizes the signals from call status circuit 200 and call progress detector 198 to accurately track the progress of telephone calls placed using telephone 150. For example, the combination of the processing performed by call progress detector 198 and call status circuit 200 can accurately detect an answer using only the signals received through the telephone line connected to telephone 150. The accurate detection of an answer to a telephone call is critical in accurately timing telephone calls and in prompting users and called parties during pendency of a telephone call. Special metering pulse detector circuit 202 monitors the signals on the telephone line coupled to telephone 150 and detects SPM signals which are commonly used in European telecommunications systems to provide for metering of telephone calls.

Peripheral bus 182 is also coupled to a modem circuit 204. Modem circuit 204 receives data signals from audio matrix 190 and transmits data signals according to the conventional operation of modem circuitry through the telephone line coupled to telephone 150. Peripheral bus 182 is also coupled to a software security circuit 206 which operates to monitor the operation of telephone 150 and control access to the operation configuration of telephone 150.

The peripheral bus 182 is also coupled to a plurality of interface circuits which couple peripheral bus 182 to external inputs used by telephone 150. For example, peripheral bus 182 is coupled to an LCD interface circuit 208 that operate to drive a liquid crystal display 210 which is used to display messages to patrons using telephone 150.

Peripheral bus 182 is also coupled to a keypad interface circuit 212. Keypad interface circuit 212 operates to connect peripheral bus 182 to an external keypad 214 that is used by patrons of telephone 150 to input digital information such as telephone numbers, credit card numbers and the like. Peripheral bus 182 is also coupled to a coin validator and escrow interface circuit 216. Coin validator and escrow interface circuit receives signals from a coin validator circuit 218 which serves to identify and validate coins put into telephone 150 by patrons of telephone 150. Coin validator and escrow interface circuit 216 also operates to control an escrow unit 220 which is used to hold coins input by users of the telephone 150 until such time as the processor 152 determines that the coins should be collected or returned to the patron.

Peripheral bus 182 is also coupled to a card interface circuit 222 which operates to connect peripheral bus 182 to a card reader system 224. As discussed previously, card reader system 224 may comprise systems operable to read magnetic cards, smart cards, or optical cards or combinations of these card technologies.

Peripheral bus 182 is also coupled to a voice recognition interface circuit 226 which couples peripheral bus 182 to a voice recognition circuit 228. Voice recognition circuit 228 is operable to receive voice signals through voice recognition interface 226 from the audio switch matrix 190. Voice signals are received and processed by voice recognition circuit 228. Voice recognition circuit 228 may operate to perform user-independent speech recognition to facilitate receiving commands from patrons or called parties during the placement of call traffic through telephone 150. For example, the acceptance of collect call traffic may be accomplished by the called party speaking the word "yes" when prompted by the telephone 150. The spoken word "yes" can then be processed using voice recognition circuit 228 and the result of this processing is communicated to processor 152 from voice recognition circuit 228 via the peripheral bus 182 and the parallel bus 166.

Telephone 150 comprises a conventional telephone handset comprising an earpiece 230 which receives audio signals from audio switch matrix 190 through a summer circuit 232 and an attenuator circuit 234. The handset of telephone 150 also comprises a microphone 236 which comprises a conventional transducer to convert voice and other acoustic energy into electrical signals which are routed through a buffer amplifier 238 to audio switch matrix 190 as shown in FIGURE 5. Telephone 150 is coupled to tip and ring of a conventional telephone line indicated generally at 240 through a line interface circuit 242. Line interface circuit 242 receives signals for transmission on telephone line 240 from an attenuator 244. Attenuator 244 receives signals from audio switch matrix 190 through a summer circuit 246. Summer circuit 246 is also coupled to the output of DTMF generator 192 and the output of modem 204. Line interface circuit 242 also outputs line signals to special metering pulse detector circuit 202.

A ring detector circuit 248 is coupled to line interface circuit 242 and operates to monitor the signals on the telephone line 240 and detect the ringing signal. A control signal is output from ring detector 248 to a ring count watchdog circuit 250. The line interface circuit 242 also provides power to a power supply circuit 252 in the case of line-powered telephones. An 18 kHz modem circuit 254 is also coupled to line interface circuit 242 and is operable to perform the data over voice signalling traffic over telephone line 240 which has been discussed previously. The signals from 18 kHz modem circuit 254 are coupled directly to a serial buffer and multiplexer circuit 256 which operates to channel selected signals into a serial port of processor 152. Serial buffer and multiplexer circuit 256 also receives serial signals from the coin validator circuit 218, the card reader circuit 224, and the modem circuit 204.

Telephone 150 also comprises a general purpose I/O interface 258 which is coupled to the audio switching matrix 190. General purpose I/O interface 258 allows for the connection of analog or digital expansion equipment to telephone 150. Using general purpose I/O interface 258, a variety of special audio generator systems such as 9600 baud modems or the like may be connected to and used with telephone 150. A signal is also transmitted from the general purpose I/O interface 258 to the serial buffer and multiplexer circuit 256 to enable communication with processor 152.

Attenuation and buffering of signals passing through audio switch matrix 190 is accomplished through attenuator generator circuits 260 and 262. Attenuator generator circuit 260 receives signals from audio switching matrix 190 through a summer circuit 264. Attenuator generator circuit 262 receives signals from audio switch matrix 190 through a summer circuit 266.

Power supply 252 receives a ring count watchdog signal from ring count watchdog circuit 250. In addition, power supply 252 receives a watchdog signal from a program watchdog circuit 268. Program watchdog circuit 268 also transmits a signal to a wake-up circuit 270. Wake up circuit 270 also receives a signal from a conventional hook switch system 272. Wake up circuit 270 serves to initialize telephone 150 and supplies a reset signal to the processor 152.

An important technical advantage of the telecommunications network of the present invention inheres in the fact that where possible the implementation of the various components of the network utilize modular hardware and software systems to provide portability of these resources. The prior discussions and figures have provided several examples of this capability. For example, both the interface card 60 and the pay telephone card 150 can utilize a Motorola 68340 microprocessor as processor 120 and processor 152, respectively. Further, as discussed previously, interface card 60 comprises a plurality of resources contained in resource circuitry 136. As discussed, many of these resources are also used by telephone 150. According to the teachings of the present invention, similar circuitry can be used in a place a resource is required to prevent duplicative design efforts and to enable portability of software between modules such as telephone 150 and interface card 160. For example, both interface card 160 and telephone 150 utilize DTMF tone generation and call progress detection. The circuits can be duplicated in both systems and conventional routines can be used to drive the circuits.

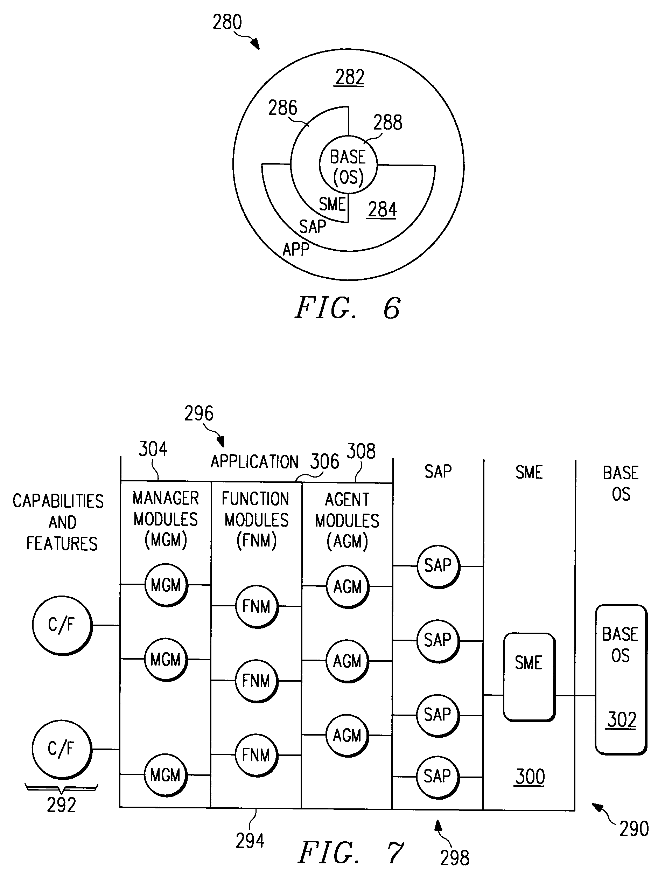

FIGURE 6 is a diagram which illustrates the novel organizational structure and communication capabilities of the software environment used in the telecommunications network of the present invention. FIGURE 6 illustrates a diagram indicated generally at 280 which illustrates the modified layered organization of the software utilized in the present invention. An outer application layer 282 is intended to represent the broad complex telecommunications features that are provided under the telecommunications network of the present invention. An application program might comprise all the software necessary to perform call management, i.e. the placement and routing of telephone calls, voice mail services, system administration and billing, fraud prevention or any of the other complex features which may be implemented using the network of the present invention as have been discussed previously.

Due to the layered construction of the software environment, a writer of a complex telecommunication application program need not be concerned with the details of the bit and wire level operation of the hardware he is utilizing. This is accomplished by providing the application writer with system application programs or SAPs which are indicated by block 284 in diagram 280. According to the teachings of the present invention, system application programs are associated with particular hardware to enable use of the hardware by higher levels of programmation. For example, a system application program may be associated with DTMF generator 192. An application program may then communicate with a system application program associated with DTMF generator 192. In this manner, the application program merely transmits to the system application program associated with DTMF generator 192 a command indicating what tone is to be generated. The system application program then accomplishes the generation of the tone by interacting with the specific hardware within DTMF generator 192. In this manner, persons developing, using or servicing high level application programs need not concern themselves with the intricacies of the hardware but can utilize the system application programs associated with hardware to provide these functions. In addition, portability of SAPs within the system insures uniformity and consistency in the interface with resources no matter where these resources are used in the system. For example, a high level programmer can count on the same interface being used to enable DTMF tone generation whether the DTMF resource is located in interface card 60 or telephone 150.

In a similar manner, the system application program can utilize a state machine engine indicated by block 286 to further insulate the system application program level 284 from the base operating system which is indicated by block 288 in diagram 280. The state machine engine 286 operates to set any particular system to a defined state when commanded by either an application program or a system application program. The state machine engine 286 will also monitor a specified condition and change the state of the system to a second identified state on the occurrence of a specified event. Once again, the state machine engine 286 allows both programmers of application programs and system application programs to insulate themselves from the intricacies of the gate level operation of the system of the present invention. A programmer of a high level routine can merely identify which state he desires the system to be in and instruct the state machine engine which will then set the parameters of the system to that particular state.

The final level of detail of the software architecture of the present invention is the base level indicated by block 288 in diagram 280. The base level in the current architecture is commonly referred to as the operating system of the network system of the present invention and comprises a multi-tasking, multi-processor operating system. The base level 288 provides system utilities common to multi-tasking, multi-processor operating systems such as task scheduling and intrasystem communications, i.e. inter-module, inter-card, and inter-processor communications.

As discussed previously, the layered approach to the software architecture illustrated in diagram 280 provides convenient facilities for developers and operators of the system of the present invention such that such persons do not need to concern themselves with details of system operation beneath their level of development. However, as the diagram 280 indicates, the software architecture of the present invention allows for communication between all layers of the software architecture if such communication is desired. For example, an application programmer developing a particular application 282 has all the system application programs 284 at his disposal. However, the application program 282 also can utilize the state machine engine or go directly to the base level 288 if he so desires. For example, a developer of an application that desires to use system utilities involving messaging between various systems between various cards has the ability under the architecture of the present invention to directly access such functionality of the operating system 288.

Further, as shown in diagram 280, a developer of system application programs may utilize the state machine engine 286 if he so desires. However, system application programmers can also go directly to the facilities provided by the base operating system 288. Accordingly, the software architecture of the present invention provides a modified layered approach that allows for higher level programmers to use predetermined lower level routines that are transportable and modular. However, facilities are provided for programmers to bypass such routines and to access the lower level utilities if such functionality is required.

FIGURE 7 illustrates a diagram indicated generally at 290 that illustrates in further detail the modified layered architecture of the software used in accordance with the teachings of the present invention. Diagram 290 illustrates a plurality of features indicated at 292 which may comprise, for example, call management services or voice mail as discussed previously. These features as indicated by line 294 in FIGURE 7 have the capability to access all levels of the software architecture including the application level which is indicated generally at 296, the system application level indicated generally at 298, the state machine engine level indicated generally at 300 and the base operating system level indicated generally at 302. Diagram 290 further illustrates that the application level 296 may be further subdivided or layered. Application level 296 is shown to comprise manager modules indicated generally at 304, function modules indicated generally at 306 and agent modules indicated generally at 308. The manager, function, and agent levels shown in FIGURE 7 indicate further stratification of the software architecture such that manager modules can rely on function modules and function modules can rely on agent modules to perform lower level tasks. However, as indicated by line 294, each level is still directly accessible by higher levels in the architecture. For example, any of the capabilities or features 292 can directly access an agent module 308, for example.

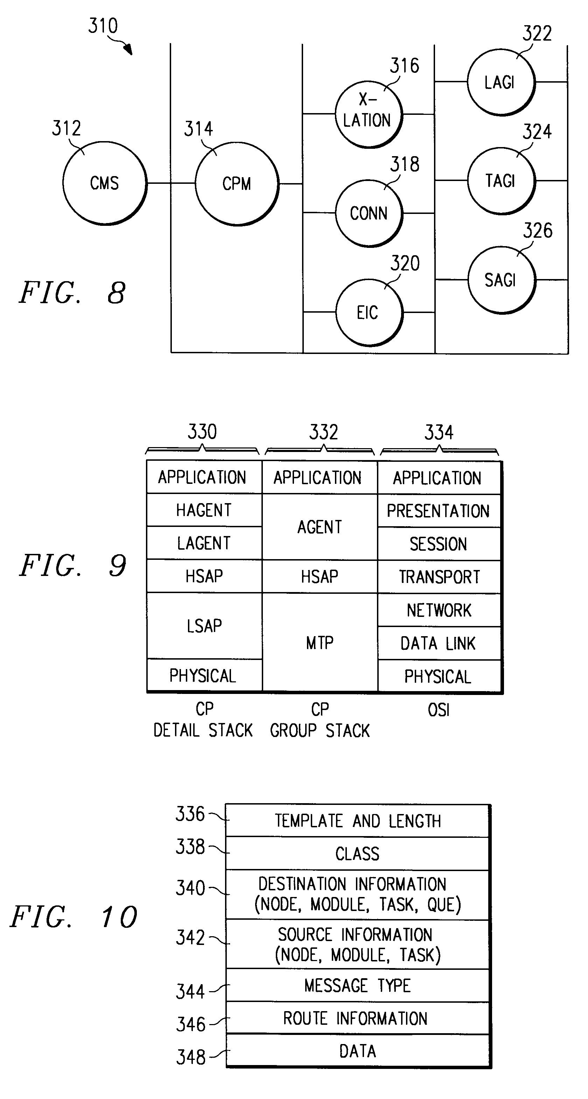

FIGURE 8 illustrates a diagram 310 which gives a specific example of a capability or feature and some of the manager, function, and agent modules it utilizes. Diagram 310 diagrams the call management system feature indicated at 312. The call management system 312 is the software program that performs the monitoring and routing of telecommunications traffic through the intelligent network platform of the telecommunications network of the present invention. The call management system 312 utilizes the variety of modules described with reference to FIGURE 2 in order to receive incoming telephone calls, connect the incoming calls to outgoing trunks, monitor special information tones and call progress signals during the telephone calls and terminate calls at their conclusion. In order to perform these tasks, the call management system 312 utilizes a call processing manager module 314. The call processing manager 314 has at its disposal a variety of function modules, three of which are indicated in FIGURE 8. Diagram 310 illustrates the translation module 316, the connection module 318 and the equipment identification code module 320. The translation module 316 includes all the tables necessary to translate received digits to internal codes to allow for connection of telephone calls. For example, the translation module 316, when given an area code and seven digit telephone number, can translate that number into the required stream of digits to internally connect the telephone line and appropriate trunk line within the network system of the present invention. The advantage of the stratification of the software architecture becomes apparent at this point. The call processing manager can merely communicate the digits of the telephone number to the translation function module 316 and need not concern itself with how the translation actually occurs. The translation module then returns to the call processing manager 314 the required digit stream to connect the call.

To continue with the same example, the call processing manager 314 can then take the data received from the translation module 316 and pass it on to the connection function module 318. The connection module 318 then performs functions such as investigating whether or not requested ports are in use and making the actual connection between the ports identified by the translation module 316. Connection module 318 thereby comprises a software image of the hardware connections within the network. Once again, the software stratification allows the call processing manager 314 to download significant functionality to a function module. The call processing manager 314 does not bother with exactly how the connection between the ports is made. All the hardware connection and monitoring of the connection is accomplished within the connection module 318.

The complex fraud prevention algorithms and systems used in the network of the present invention are also contained within a function module known as the equipment identification code module 320. Module 320 receives the codes transmitted from a local telecommunications instrument and performs the calculations necessary to make sure the instrument is authorized to utilize the intelligent network platform. Once again, the stratification of this architecture enables the functionality to be contained solely within the equipment identification code module 320. The call processing manager 314 need only request the module 320 to perform a security check. The call processing manager will then receive back from module 320 a "go" or "no go" code as to whether or not the telephone instrument is authorized.

Diagram 310 illustrates that there is an additional level of agent modules between the function modules and the system application program level 298 illustrated in FIGURE 7. Diagram 310 presents specific examples of agent modules including a line agent module 322, a trunk agent module 324, and a signaling agent module 326. Line agent module 322 is used by, for example, the connection function 318 to handle the actual hardware connection and communication over a telephone line. In operation, for example, the connection module 318 would identify the fact that it needed to seize a telephone line. The line agent module would then communicate with the system application programs controlling the hardware interface to the actual line. The trunk agent module 324 performs similar functions with respect to the trunk side of the communication path.

The signaling agent module 326 performs the needed functions to accomplish the data-over-voice signaling described previously. This can be used in the fraud prevention methods and systems described previously. In this example, the equipment identification code function 320 might utilize the signaling agent 326 to transmit and receive security codes between an intelligent network platform and a local telecommunications device.

FIGURE 9 illustrates a graphical comparison of the communication protocol used in the architecture of the present invention as it relates to the standard OSI stack protocol. FIGURE 9 indicates a communication protocol detail stack indicated generally at 330. FIGURE 9 also illustrates a communication protocol group stack indicated at 332 and the conventional OSI stack which is indicated at 334. As shown in FIGURE 9, the application level in the conventional OSI group stack corresponds exactly with the application level in both the communication protocol group and detail stacks. The presentation and session levels with the OSI stack correspond with the agent level in the group stack and are subdivided into a high level agent and a low level agent level in the communication protocol detail stack 330. The transport level of the OSI stack corresponds to the high level system application in both the communication protocol and detail stacks 332 and 330, respectively. The network, data link, and physical levels of the OSI stack correspond to the message transfer protocol level in the communication protocol group stack. The network and data link levels in the OSI stack correspond to the lower level system application program level in the communication protocol detail stack. The physical level of the conventional OSI stack corresponds directly with the physical level in the communication protocol detail stack. In this manner, the internal architecture of the software and hardware systems used in the network of the present invention provide for lateral compatibility with the conventional OSI stack.

FIGURE 10 is a diagram which illustrates the standard message format used in intrasystem communication within the telecommunication network of the present invention. The message format begins with the template and length block 336. The next portion of the message is a class block 338. The next portion contains destination information indicated at block 340. The destination information may contain information specifying the node, module, task, or queue to which the message is directed. The next block 342 of the message format indicates the source of the message. This block of the message may contain data specifying the node, module, or task from which the message originated. The next field of the message format indicated at 344 indicates the type of message that is being transmitted. The next field 346 of the message includes data which contains information as to how the information is to be routed through the system. The actual data of the message is contained in block 348, the final block within the message format.

Although a telecommunications network and methodolgy according to the teachings of the present invention has been described in detail, it should be understood that various changes, substitutions and alterations may be made to the systems and methods disclosed without departing from the scope and spirit of the invention as solely defined by the appended claims.

## Claims

1. A telecommunications system, comprising:
a local telecommunications device accessible to a user of the telecommunications system;
an intelligent network platform coupled to said local telecommunications device and operable to receive telephone calls from said local telecommunications device;
interface systems associated with said intelligent platform and operable to couple said intelligent network platform to communication links associated with a telecommunications network; and
telecommunications service modules associated with said intelligent network platform and operable to provide automated telecommunications services to the user in conjunction with calls placed by the user using said local telecommunications device.

2. The telecommunications system of Claim 1 wherein said interface systems are coupled to a plurality of network lines and wherein said local telecommunications device and said intelligent network platform are coupled through a telephone line, said telecommunications service modules comprising switching systems operable to selectively couple said telephone line to a selected one of said network lines.

3. The telecommunications system of Claim 2 wherein said switching systems are further operable to selectively couple said telephone line to other selected ones of said telecommunications service modules.

4. The telecommunications system of Claim 1 wherein said telecommunications service modules comprise a voice mail module operable to record and play back voice messages left by users of the telecommunications system.

5. The telecommunications system of Claim 1 wherein said local telecommunications device and said intelligent network platform are connected via a telephone line, the system further comprising:
telephone line interface circuitry associated with said intelligent network platform and operable to couple said intelligent network platform to the telephone line;
said telephone line interface circuitry comprising first out of band communications circuitry operable to transmit and receive signals via the telephone line using a predetermined frequency; and
second out of band communications circuitry associated with the local telecommunications device and coupled to the telephone line, said second out of band communications circuitry operable to transmit and receive signals via the telephone line using said predetermined frequency.

6. The telecommunications system of Claim 1 and further comprising:
a card reader system associated with said local telecommunications device operable to receive and read data from a card associated with the user.

7. A modular telecommunications system coupled to links of a telecommunications network and operable to process telecommunications traffic through the network, the system comprising:
a multichannel bus;
a power module coupled to said multichannel bus and operable to deliver operating power to the system;
an interface module coupled to a plurality of the links of the network, said interface module coupled to said multichannel bus and operable to communicate traffic from the links to the system;
a service module coupled to said multichannel bus and operable to provide a telecommunications service to users of the system and the network;
a switch module coupled to said multichannel bus and operable to selectively route traffic within the system between selected links serviced by said interface module and said service module; and
a real time module coupled to said multichannel bus and operable to control the processing of telecommunications traffic using said interface module, said service module, and said switch module.

8. The system of Claim 7 and further comprising:
an administrative control module coupled to said multichannel bus and operable to administer the configuration of the system, said administrative control module comprising memory systems operable to store information associated with the telecommunications traffic processed by the system.

9. The system of Claim 8 wherein said memory systems are operable to store account identification and balance information associated with accounts associated with users of the system, said administrative control module operable to update said balance information by applying charges associated with telecommunications traffic processed by the system to an appropriate account stored within said memory systems.

10. The system of Claim 8 wherein said memory systems are operable to store account identification and preferred carrier information associated with accounts associated with users of the system;
said administrative control module operable to retrieve particular preferred carrier information associated with a particular user of the system, said interface module comprising interface circuitry operable to be coupled to a plurality of common carrier trunks including a particular common carrier trunk identified by said particular preferred carrier information associated with said particular user; and
the system operable to route appropriate telecommunications traffic requested by said particular user using said particular common carrier trunk.

11. The system of Claim 7 wherein said service module comprises a voice mail system operable to record and play back voice messages received from users of the system and the network.

12. The system of Claim 7 wherein said service module comprises an automated operator system operable to process automatic collect calls by recording information from the user identifying the user, the system operable to complete a communication path to a called party and inform the called party of the requested collect call using the information recorded from the user, the system further operable to prompt the called party as to how to indicate acceptance of the collect call and to receive an answer to the prompt from the called party.

13. The system of Claim 7 wherein said system is coupled to a local telecommunications device and is operable to receive a telephone number dialed in a first billing format indicating charges associated with the telephone call are to be billed to an account other than the account associated with the local telecommunications device, the system operable to convert the telephone number from said first format to a direct dial format and complete the call using said direct dial format.

14. The system of Claim 7 wherein said interface module comprises telephone line interface circuitry operable to couple the system to a telephone line associated with the network.

15. The system of Claim 7 wherein said interface module comprises SS7 link interface circuitry operable to couple the system to an SS7 link associated with the network.

16. The system of Claim 7 wherein said interface module comprises fiber-optic line interface circuitry operable to couple the system to a fiber-optic line associated with the network.

17. The system of Claim 7 wherein said interface module comprises network multiplexer/demultiplexer interface circuitry operable to couple the system to a network multiplexer/demultiplexer system associated with a cellular interface within the network.

18. A telecommunications system operable to route telecommunications traffic, comprising:
an originating telephone accessible to a user of the system and comprising input systems operable to receive destination identification information;
a first intelligent network platform selectively coupled to said originating telephone and comprising a first interface module, said first intelligent network platform operable to receive said destination identification information from said originating telephone;
a second intelligent network platform comprising a second interface module;
a destination telephone identified by said destination identification information and selectively coupled to said second intelligent network platform; and
a transmission system selectively coupled between said first and second interface modules and operable to route telecommunications traffic from said first intelligent network platform to said second intelligent network platform.

19. The system of Claim 18 wherein said transmission system comprises a microwave transmitter associated with said first intelligent network platform and a microwave receiver associated with said second intelligent network platform.

20. The system of Claim 18 wherein said transmission system comprises a first satellite transceiver associated with said first intelligent network platform, a second satellite transceiver associated with said second intelligent network platform, and a communications satellite operable to route telecommunications traffic between said first and second satellite transceivers.

21. A telecommunications system, comprising:
a local telecommunications device accessible to a user of the telecommunications system;
an intelligent network platform coupled to said local telecommunications device through a telephone line and operable to receive telephone calls from said local telecommunications device;
interface systems associated with said intelligent platform and operable to couple said intelligent network platform to communication links associated with a telecommunications network;
telecommunications service modules associated with said intelligent network platform and operable to provide automated telecommunications services to the user in conjunction with calls placed by the user using said local telecommunications device;
storage circuitry associated with said local telecommunications device operable to store identification information unique to the particular local telecommunications device; and
processing circuitry associated with said local telecommunications device operable to retrieve and transmit said unique identification information to said intelligent network platform such that access to said intelligent network platform is secure against unauthorized use.

22. The telecommunications system of Claim 21 and further comprising:
telephone line interface circuitry associated with said intelligent network platform and operable to couple said intelligent network platform to the telephone line;
said telephone line interface circuitry comprising first out of band communications circuitry operable to transmit and receive signals via the telephone line using a predetermined frequency;
second out of band communications circuitry associated with the local telecommunications device and coupled to the telephone line, said second out of band communications circuitry operable to transmit and receive signals via the telephone line using said predetermined frequency;
said local telecommunications device operable to transmit said unique identification information to said intelligent network platform using said second out of band communication circuitry; and
said intelligent network platform operable to receive said unique identification information using said first out of band communication circuitry.

23. A modular telecommunications system coupled to links of a telecommunications network and operable to process telecommunications traffic through the network, the system comprising:
a multichannel bus;
a power module coupled to said multichannel bus and operable to deliver operating power to the system;
an interface module coupled to a plurality of the links of the network, said interface module coupled to said multichannel bus and operable to communicate traffic from the links to the system;
a service module coupled to said multichannel bus and operable to provide a telecommunications service to users of the system and the network;
a switch module coupled to said multichannel bus and operable to selectively route traffic within the system between selected links serviced by said interface module and said service module;
a real time module coupled to said multichannel bus and operable to control the processing of telecommunications traffic using said interface module, said service module, and said switch module; and
an administrative control module coupled to said multichannel bus and operable to administer the configuration of the system, said administrative control module comprising memory systems operable to store information associated with the telecommunications traffic processed by the system, said memory systems operable to store security information identifying local telecommunications devices authorized to access the system, said administrative control module operable to access said security information responsive to a request for access to the system.
